# EUROPEAN PATENT SPECIFICATION

(11) **EP 3 590 998 B1**
(45) Date of publication and mention of the grant of the patent: **09.08.2023**
(21) Application number: 19020386.9
(22) Date of filing: 15.06.2019
(51) Int. Cl.: C08J 11/06, B29B 17/04, B29B 17/00, B29B 17/02, B29K 77/00, B29L 28/00

(54) **RECYCLED PLASTICS MATERIAL**
RECYCELTES KUNSTSTOFFMATERIAL
MATÉRIAU PLASTIQUE RECYCLÉ

(30) Priority: 03.07.2018 GB 201810898
(43) Date of publication of application: 08.01.2020
(73) Proprietor: Milspeed Limited, Bourton on the Water, Gloucestershire GL54 2HQ (GB)
(72) Inventor: Milhench, Ian, Bourton On The Water Gloucestershire GL54 2HQ (GB); Tunski, Wojciech, Bourton On The Water Gloucestershire GL54 2HQ (GB)
(74) Representative: Bazant-Hegemark, Florian

(56) References cited:
- CN-A- 104 630 916
- CN-A- 107 778 524
- US-A1- 2017 088 686

## Description

This invention relates to a recycled plastics material, and in particular to a material suitable for use in the formation of thin films such as those used as reinforcement layers or stiffeners used in shoes or other footwear. Whilst suitable for use in such applications, the recycled material of the present invention may be used in a range of other applications.

EP1358986 describes a laminar or thin film like material used in the production of stiffeners and other components of shoes. The material includes a core upon which a layer of a non-woven scrim is provided. In use, off-cuts of the material can be completely melted and mixed with virgin materials to form pellets of a substantially homogenous form which can be used in the formation of at least the core of more material of the type described in EP1358986.

The method described in EP1358986 is advantageous in that left over, off-cut material can be recycled, and so the production of waste for disposal is reduced.

US2017/088686 describes a method in which used nylon can be blended with a new nylon material. CN107778524 also describes recycling of waste plastics materials.

There are many sources of waste plastics materials, and is it desirable to be able to recycle such materials to avoid the quantity of waste material sent to landfill or burnt. There are a number of products in which such materials may be used. In general, however, their presence is simply as a bulk filler.

Nylon products are typically not recycled as doing so is problematic. In order to recycle plastics material products it is usually necessary to form the material into pellets suitable for passing through an extruder to form a new product. However, when it is attempted to form nylon recycled materials into pellets, the process has to be very accurately controlled as if the molten nylon material is of too low a viscosity, it does not form into pellets of good uniformity and shape, but if too high a viscosity, it tends to jam the machinery used to cut the material into pellets.

Wet nylon products, such as used fishing nets, are typically not recycled as such materials are particularly difficult to recycle as a result of the quantity of water contained therein and the fact that the materials may be contaminated as a result of the nature of the locations in which they have been used. By way of example, waste fishing net material typically has a water content in the region of 10-15%wt for relatively thick nets, and 2-5%wt for thinner material nets, but a water content as low as in the region of 2%wt is problematic when products are extruded from nylon containing materials.

It is an object of the invention to provide a recycled plastics material in which such waste wet nylon products can be incorporated, and a method by which such products can be recycled.

According to the present invention there is provided a recycling method as defined by appended Claim 1.

By blending the nylon material with another plastics material prior to forming it into pellets, it has been found that the formation of the pellets is simplified, the problems mentioned hereinbefore being less significant when blended.

The dried granular material may contain a quantity of PET as well as nylon.

The polymer may incorporate a quantity of recycled material. By way of example, the method described in EP1358986 may be used to incorporate a quantity of recycled material within the polymer material. Alternatively, it may be a virgin material.

The extrusion of the blended material may be used to form a thin film material. By way of example, the thin film material may be of a type used in the reinforcement or stiffening of a shoe or other footwear. The production of thin films of pure nylon is difficult and so the invention is beneficial in that it allows the use of nylon material in products that would not otherwise be possible or practical.

The nylon material preferably makes up 10-25%wt, more preferably 15-25%wt, of the blended material. It has been found that by using such a level of nylon material in the blended material, certain material benefits such as enhanced stiffness and resilience can be achieved without negatively impacting upon characteristics of the non-nylon material such as low activation/moulding temperatures which are especially useful in certain applications such as in the formation of footwear components where the use of higher temperatures can spoil other component materials such as those used in linings or upper materials.

The water content of the nylon material is preferably reduced to a level less than 0.05%wt, and more preferably is reduced to a level in the region of 0.02-0.03%wt. The water content may be reduced by passing the material through a vacuum drying apparatus to extract water therefrom. The formation of the material into granular form is preferably achieved by cutting or chopping the material, for example forming the material into short strands of length less than, say, 10mm, and preferably in the region of 3-7mm, and the action of cutting or chopping may heat the material, aiding the drying process by promoting the evaporation of water from the material.

Preferably, prior to melting the material, a cleaning operation is performed to remove contaminants therefrom.

The waste wet nylon material conveniently comprises waste fishing net material. Depending upon the material, such a material typically has a water content in the region of 10-15%wt or more as mentioned above. Such materials are typically unsuited to recycling as the water content results in the formation of imperfections in the finished product. Consequently, the materials tend to be disposed of by being sent to landfill or by burning. A large quantity of such materials are disposed of at sea, simply by depositing the materials overboard. Whilst wet nylon fishing nets may be recycled or reprocessed in this manner, it will be appreciated that the invention is not restricted in this regard and that other wet nylon materials, for example those that have been used or stored outdoors and so may contain a significant quantity of water may be employed in the invention.

Fishing net material typically includes PET material strings, and the PET may be included in the nylon material incorporated in the pellets, as mentioned hereinbefore.

The nylon preferably makes up at least 10%wt of the blended material. Preferably, the nylon makes up less than 25%wt of the blended material. Preferably, nylon content of the blended material is in the region of 20%wt.

The incorporation of the nylon material in the blended material in the manner of the invention is advantageous not only in that used nylon material can be recycled or reprocessed into another useful product, but also in that the presence of the nylon material within the end product may enhance the characteristics of the end product compared to an equivalent product not including the nylon material. By way of example, where used in the manufacture of a thin film used in the production of stiffener materials for shoes or other footwear, the presence of the nylon in the finished product may result in the stiffener material being of improved or enhanced stiffness and resilience. Accordingly, in order to produce a stiffener of a given stiffness, a thinner film of material may be used. The invention may therefore represent not only a technique for using recycled materials, but makes use of at least some of the properties thereof and so provides the original material with a useful "second life".

The invention allows the formation of pellets of a material suitable for, for example, injection moulding, the pellets being of a material of enhanced characteristics such as stiffness and resilience due to the presence of the nylon therein whilst maintaining a suitable thermoplastic softening point allowing relatively straightforward processing to form the end product.

Whilst Surlyn or EVA represent suitable materials with which the nylon may be blended, the invention is not restricted in this regard and other non-nylon materials such as polypropylene may be used, depending upon the required characteristics of the end product. The polypropylene material may be derived from, for example, old or used crisp packets.

The invention also relates to a pellet manufactured as set out in Claim 14. The pellet may be of the form described hereinbefore. The invention further relates to a product formed as set out in Claim 15. The product may comprise a shoe stiffener material.

The invention will further be described, by way of example, with reference to the accompanying drawings, in which:

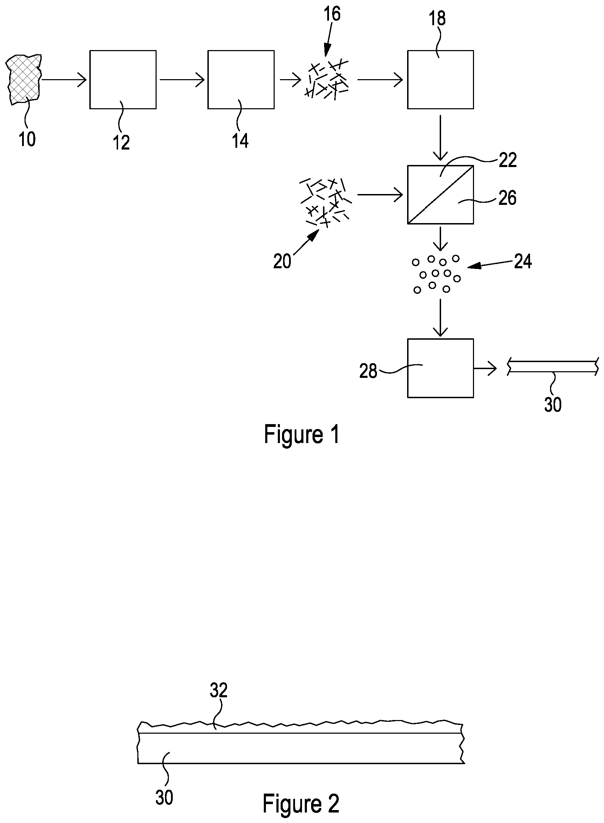

Figure 1 is a diagrammatic view illustrating a method in accordance with an embodiment of the invention; and
Figure 2 is a diagrammatic view illustrating a product manufactured in accordance with an embodiment of the invention.

Referring to the accompanying drawings, a method of recycling certain plastics materials and a plastics material product formed using the method are illustrated. According to the method, waste wet nylon material 10, for example in the form of waste fishing net material is passed through a cleaning station 12 to wash or otherwise remove contaminant materials therefrom. The cleaned material is then passed through a chopping or cutting station 14 to cut the material 10 into short strands, for example of length less than 10mm, for example in the region of 3 to 7mm. The short strands are referred to herein as granules 16.

The chopping or cutting action undertaken within the station 14 generates heat which aids evaporation of water from the material 10.

In the arrangement shown, after chopping or cutting the material in the station 14, the granules 16 are passed through a drying station 18, for example in the form of a vacuum drying station, operable to extract water from the granules 16. The operation of the drying station 18 serves to reduce the water content of the granules 16 to less than 1%wt, preferably less than 0.05%wt.

Nylon fishing nets typically include a quantity of PET material strings. In the arrangement illustrated, the PET material is left in position as the material 10 is passed through the stations 14, 18. Accordingly, the dried granules 16 exiting the drying station 18 will include, in addition to nylon, a quantity of PET. The presence of PET in the granules 16 is not essential to the invention, but its presence is not problematic and so in many applications the inclusion of an additional step of removing the PET material from the waste fishing nets is not worthwhile.

Whilst in the arrangement described hereinbefore, the cleaning operation, chopping or cutting operation and drying operation are undertaken in a particular sequence, the invention is not restricted in this regard and the order in which these steps are taken may be modified, if desired.

Granules 20 of another polymer material, for example chopped, recycled waste materials including Surlyn and EVA from the production of thin film like shoe stiffener materials, are blended with the granules 16 in a blending station 22 before being melted and formed into pellets 24 in station 26.

The pellets 24 thus contain a mixture of recycled nylon and the polymer material. Preferably, the pellets 24 contain less than 25%wt nylon. They preferably contain at least 10%wt nylon, and the quantity of nylon present in the pellets 24 is preferably in the region of 20%wt.

The pellets 24 are extruded by extruder 28 to form a thin film material 30 suitable for use in a shoe stiffener material. If desired, the material 30 may form the core of a shoe stiffener material, and a non-woven material scrim 32 may subsequently be applied to the thin film material 30.

It has been found that by incorporating a quantity of nylon in the thin film material 30, the physical characteristics of the material 30 are enhanced. By way of example, the thin film material 30 may be of enhanced stiffness and resilience. Consequently, where used as a shoe stiffener material, to achieve a given level of stiffness, a thinner material than would otherwise be required may be used. Accordingly, the invention is advantageous not only in that it allows recycling of waste material that may otherwise have been sent to landfill, burnt or otherwise disposed of, but also the use of the waste material enables the production of a product with enhanced characteristics.

Where used as a shoe stiffener material, it will be appreciated the off-cuts of the thin film material 30 will be produced which may be cut or chopped for form granules 20 for incorporation with other materials at the blending station 20. Accordingly, the formation of waste materials for disposal is further reduced.

Although used, waste fishing net material represents one source of waste wet nylon suitable for recycling and incorporation into a product in accordance with the invention, wet nylon materials from other sources may be used. By way of example, other nylon materials that have been used or stored outdoors and so include a quantity of water may be used in accordance with the invention. Such materials are typically not recycled as the water content therein can result in the formation of imperfections in the finished product.

As described hereinbefore, the invention is beneficial in that it allows nylon to be used in the manufacture of products such as thin films where it would not normally be used, allowing enhancements to the characteristics of such products, for example achieving enhanced stiffness and resilience. The enhanced characteristics are achieved without significantly changing the processing requirements of the other material with which the nylon is blended, and so low activation or moulding temperatures are still possible.

Although Surlyn and EVA represent suitable non-nylon materials with which the invention may be used, other materials such as polypropylene may be used. By way of example, the polypropylene may be derived from old or used crisp packets.

Whilst a specific method and product in accordance with the invention are described hereinbefore, it will be appreciated that a wide range of modifications and alterations may be made thereto without departing from the scope of the invention as defined by the appended claims.

## Claims

1. A recycling method comprising processing waste wet nylon material (10) to form the material into a granular form, drying the material (10) to extract water therefrom, and **characterised in that** the drying reduces the water content of the material (10) to less than 1°/wt, the method further comprising blending the dried granular material with granules (20) of another, non-nylon plastics material, melting the blended granular material and forming it into pellets (24), and extruding the blended material to form a product, wherein the said another non-nylon plastics material comprises Surlyn (an ionomer resin comprising a copolymer of ethylene and methacrylic acid) and/or EVA and/or polypropylene, and the nylon material (10) makes up less than 25%wt of the blended material.

2. A method according to Claim 1, wherein the dried granular material contains a quantity of PET as well as nylon.

3. A method according to any of the preceding claims, wherein the extrusion of the blended material is used to form a thin film material (30), for example for use in the reinforcement or stiffening of a shoe or other footwear.

4. A method according to any of the preceding claims, wherein the water content of the nylon material (10) is reduced to a level less than 0.05%wt.

5. A method according to Claim 4, wherein the water content of the nylon material (10) is reduced to a level in the region of 0.02-0.03%wt.

6. A method according to any of the preceding claims, wherein the water content is reduced by passing the material through a vacuum drying apparatus to extract water therefrom.

7. A method according to any of the preceding claims, wherein the formation of the material (10) into granular form is achieved by cutting or chopping the material.

8. A method according to any of the preceding claims, wherein prior to melting the material (10), a cleaning operation is performed to remove contaminants therefrom.

9. A method according to any of the preceding claims, wherein the waste wet nylon material (10) comprises waste fishing net material.

10. A method according to any of the preceding claims, wherein the nylon material (10) makes up at least 10%wt of the blended material.

11. A method according to any of the preceding claims, wherein the nylon material (10) makes up in the region of 20%wt of the blended material.

12. A pellet manufactured by processing waste wet nylon material (10) to form the material into a granular form, drying the material (10) to extract water therefrom, **characterised in that** the drying reduces the water content of the material (10) to less than 1°/wt, blending the dried granular material with granules of another non-nylon plastics material, melting the blended granular material and forming it into pellets (24), wherein the said another non-nylon plastics material comprises Surlyn (an ionomer resin comprising a copolymer of ethylene and methacrylic acid) and/or EVA and/or polypropylene, and the nylon material (10) makes up less than 25%wt of the blended material.

13. A product formed by extrusion of the pellet material of Claim 12.

## Patentansprüche

1. Recyclingverfahren, umfassend das Verarbeiten von nassem Nylonabfallmaterial (10), um das Material in eine körnige Form zu bringen, das Trocknen des Materials (10), um Wasser davon zu entziehen, und **dadurch gekennzeichnet, dass** das Trocknen den Wassergehalt des Materials (10) auf weniger als 1 Gew.-% reduziert, wobei das Verfahren ferner das Mischen des getrockneten körnigen Materials mit Körnchen (20) aus einem anderen Kunststoffmaterial, das kein Nylon ist, das Schmelzen des gemischten körnigen Materials und das Formen dieses zu Pellets (24) und das Extrudieren des gemischten Materials zum Bilden eines Produkts umfasst, wobei das andere Kunststoffmaterial, das kein Nylon ist, Surlyn (ein Ionomerharz, das ein Copolymer aus Ethylen und Methacrylsäure umfasst) und/oder EVA und/oder Polypropylen umfasst und das Nylonmaterial (10) weniger als 25 Gew.-% des gemischten Materials ausmacht.

2. Verfahren nach Anspruch 1, wobei das getrocknete körnige Material eine Menge PET sowie Nylon enthält.

3. Verfahren nach einem der vorhergehenden Ansprüche, wobei die Extrusion des gemischten Materials zum Bilden eines dünnen Folienmaterials (30) verwendet wird, beispielsweise zur Verwendung zur Verstärkung oder Versteifung eines Schuhs oder anderen Schuhwerks.

4. Verfahren nach einem der vorhergehenden Ansprüche, wobei der Wassergehalt des Nylonmaterials (10) auf einen Wert von weniger als 0,05 Gew.-% reduziert wird.

5. Verfahren nach Anspruch 4, wobei der Wassergehalt des Nylonmaterials (10) auf einen Wert im Bereich von 0,02 Gew.-% -0,03 Gew.-% reduziert wird.

6. Verfahren nach einem der vorhergehenden Ansprüche, wobei der Wassergehalt reduziert wird, indem das Material durch eine Vakuumtrocknungsvorrichtung geleitet wird, um Wasser davon zu entziehen.

7. Verfahren nach einem der vorhergehenden Ansprüche, wobei die Bildung des Materials (10) in eine körnige Form durch Schneiden oder Hacken des Materials erreicht wird.

8. Verfahren nach einem der vorhergehenden Ansprüche, wobei vor dem Schmelzen des Materials (10) ein Reinigungsvorgang durchgeführt wird, um Verunreinigungen davon zu entfernen.

9. Verfahren nach einem der vorhergehenden Ansprüche, wobei das nasse Nylonabfallmaterial (10) Fischernetzabfallmaterial umfasst.

10. Verfahren nach einem der vorhergehenden Ansprüche, wobei das Nylonmaterial (10) mindestens 10 Gew.-% des gemischten Materials ausmacht.

11. Verfahren nach einem der vorhergehenden Ansprüche, wobei das Nylonmaterial (10) etwa 20 Gew.-% des gemischten Materials ausmacht.

12. Pellet, hergestellt durch das Verarbeiten von nassem Nylonabfallmaterial (10), um das Material in eine körnige Form zu bringen, das Trocknen des Materials (10), um Wasser davon zu entziehen, **dadurch gekennzeichnet, dass** das Trocknen den Wassergehalt des Materials (10) auf weniger als 1 Gew.-% reduziert, das Mischen des getrockneten körnigen Materials mit Körnchen aus einem anderen Kunststoffmaterial, das kein Nylon ist, das Schmelzen des gemischten körnigen Materials und das Formen dieses zu Pellets (24), wobei das andere Kunststoffmaterial, das kein Nylon ist, Surlyn (ein Ionomerharz, das ein Copolymer aus Ethylen und Methacrylsäure umfasst) und/oder EVA und/oder Polypropylen umfasst und das Nylonmaterial (10) weniger als 25 Gew.-% des gemischten Materials ausmacht.

13. Produkt, das durch Extrusion des Pelletmaterials nach Anspruch 12 gebildet wird.

## Revendications

1. Procédé de recyclage comprenant le traitement d'un matériau en nylon humide de rebut (10) pour former le matériau en une forme granulaire, le séchage du matériau (10) pour en extraire l'eau, et **caractérisé en ce que** le séchage réduit la teneur en eau du matériau (10) à moins de 1 % en poids, le procédé comprenant en outre le mélange du matériau granulaire séché avec des granulés (20) d'un autre matériau plastique non nylon, la fonte du matériau granulaire mélangé et sa formation en pastilles (24), et l'extrusion du matériau mélangé pour former un produit, dans lequel ledit autre matériau plastique non nylon comprend du Surlyn (une résine ionomère comprenant un copolymère d'éthylène et d'acide méthacrylique) et/ou de l'EVA et/ou du polypropylène, et le matériau nylon (10) constitue moins de 25 % en poids du matériau mélangé.

2. Procédé selon la revendication 1, dans lequel le matériau granulaire séché contient une quantité de PET ainsi que du nylon.

3. Procédé selon l'une quelconque des revendications précédentes, dans lequel l'extrusion du matériau mélangé est utilisée pour former un matériau en film mince (30), par exemple pour une utilisation dans le renforcement ou le raidissement d'une chaussure ou d'un autre vêtement de sport.

4. Procédé selon l'une quelconque des revendications précédentes, dans lequel la teneur en eau du matériau de nylon (10) est réduite à un niveau inférieur à 0,05 % en poids.

5. Procédé selon la revendication 4, dans lequel la teneur en eau du matériau de nylon (10) est réduite à un niveau dans la région de 0,02 à 0,03 % en poids.

6. Procédé selon l'une quelconque des revendications précédentes, dans lequel la teneur en eau est réduite en faisant passer le matériau à travers un appareil de séchage sous vide pour en extraire l'eau.

7. Procédé selon l'une quelconque des revendications précédentes, dans lequel la formation du matériau (10) sous forme granulaire est obtenue par découpe ou hachage du matériau.

8. Procédé selon l'une quelconque des revendications précédentes, dans lequel, avant de fondre le matériau (10), une opération de nettoyage est effectuée pour en éliminer les contaminants.

9. Procédé selon l'une quelconque des revendications précédentes, dans lequel le matériau de nylon humide de rebut (10) comprend un matériau de filet de pêche de rebut.

10. Procédé selon l'une quelconque des revendications précédentes, dans lequel le matériau de nylon (10) constitue au moins 10 % en poids du matériau mélangé.

11. Procédé selon l'une quelconque des revendications précédentes, dans lequel le matériau de nylon (10) constitue environ 20 % en poids du matériau mélangé.

12. Pastille fabriquée par traitement d'un matériau de nylon humide de rebut (10) pour former le matériau en une forme granulaire, séchage du matériau (10) pour en extraire l'eau, **caractérisée en ce que** le séchage réduit la teneur en eau du matériau (10) à moins de 1 % en poids, mélange du matériau granulaire séché avec des granulés d'un autre matériau plastique non-nylon, fonte du matériau granulaire mélangé et formation de celui-ci en pastilles (24), dans laquelle ledit autre matériau plastique non-nylon comprend du Surlyn (une résine ionomère comprenant un copolymère d'éthylène et d'acide méthacrylique) et/ou de l'EVA et/ou du polypropylène, et le matériau en nylon (10) constitue moins de 25 % en poids du matériau mélangé.

13. Produit formé par extrusion du matériau en pastilles selon la revendication 12.
